# EUROPEAN PATENT SPECIFICATION

(11) **EP 2 811 690 B1**
(45) Date of publication and mention of the grant of the patent: **22.11.2017**
(21) Application number: 14169625.2
(22) Date of filing: 23.05.2014
(51) Int. Cl.: H04L 12/24, H04W 84/20, H04W 60/00

(54) **Method and apparatus for managing wireless docking network**
Verfahren und Vorrichtung zur Verwaltung eines drahtlosen Docking-Netzwerks
Procédé et appareil de gestion de réseau d'accueil sans fil

(30) Priority: 23.05.2013 US 201361826698 P; 24.06.2013 US 201361838664 P; 08.10.2013 US 201361888221 P
(43) Date of publication of application: 10.12.2014
(73) Proprietor: Samsung Electronics Co., Ltd., Gyeonggi-do 443-742 (KR)
(72) Inventor: Lee, Jong-Hyo, 443-742 Gyeonggi-do (KR); Srinivasa Gopalan, Karthik, 560093 Bangalore (IN); Vedula, Kiran Bharadwaj, 560093 Bangalore (IN); Kim, Jun-Hyung, 443-742 Gyeonggi-do (KR)
(74) Representative: HGF Limited

(56) References cited:
- US-A1- 2011 188 391
- WI-FI ALLIANCE: "Wi-Fi Peer-to-Peer (P2P) Specification v1.1", WI-FI ALLIANCE SPECIFICATION,, 1 January 2010 (2010-01-01), pages 1-159, XP009163866,

## Description

### BACKGROUND

### 1. Field of the Invention

The present invention relates generally to wireless networks, and more particularly, to a method and an apparatus for managing a wireless docking network.

### 2. Description of the Related Art

Wireless-Fidelity (Wi-Fi) is the brand name of Wi-Fi Alliance and refers to a series of technologies supporting a Wireless Local Area Network (WLAN) connection based on Institute of Electrical and Electronics Engineers (IEEE) 802.11, a Wi-Fi Peer-to-Peer (P2P) connection, a Personal Area Network (PAN)/Local Area Network (LAN)/Wide Area Network (WAN) configuration, and the like.

A wireless docking system is a system for wirelessly connecting peripheral devices, such as, for example, Internet, a TeleVision (TV), a monitor, a beam projector, a printer, a scanner, a mouse, a storage unit, and the like, to a device, such as, for example, a notebook computer, a desktop computer, a tablet Personal Computer (PC), and the like.

A Universal Plug and Play (UPnP) corresponds to a concept expanded from Plug and Play (PnP) which allows a computer to automatically search for and use a device, when the device is attached to the computer over a network. That is, when devices such as, for example, a peripheral device, an intelligent home appliance, wireless equipment, and the like, access a predetermined network, UPnP allows the devices to automatically recognize each other though a web protocol.

In UPnP, when any device is added to the network, the device is completely configured by itself. Devices transmit/receive Transmission Control Protocol (TCP)/Internet Protocol (IP) addresses to each other, and use a found protocol based on a HyperText Transfer Protocol (HTTP) to inform other devices of the existence thereof. For example, when a camera and a printer are currently connected to the network and a button of the camera is pressed to output a picture through the printer, the camera may transmit a discovery request signal to the network, and a currently available printer is discovered over the network according to the discovery request signal. The printer having received the corresponding signal transmits its location to the camera in the form of Uniform Resource Locator (URL). In UPnP, each of the devices uses an extensible Markup Language (XML) as a common language or may determine a communication scheme through a protocol negotiation. In the example described above, when the common language for the XML or communication is determined, the camera may control the printer and output a selected picture. The UPnP defines a Device Management (DM) protocol and allows the DM protocol to remotely control the devices connected to the network.

In general, all types of peripheral devices supporting a UPnP protocol may be connected to a wireless docking system. The peripheral devices may be wired or wireless peripheral devices. The wireless peripheral devices may be BlueTooth (BT) based peripheral devices or Wi-Fi based peripheral devices. The Wi-Fi based peripheral device includes, for example, a Wi-Fi Serial Bus (WSB) mouse, a Miracast sink, or the like.

US2011/0188391 A1 discloses interrelated Wi-Fi and USB protocols which may be used to form and operate peer-to-peer (P2P) groups. The Wi-Fi protocols may be used as an underlying P"P protocol for device discovery, link establishment, link management and power management.

"Wi-Fi Peer-to-Peer (P2P) Specification v1.1", Wi-Fi Alliance Specification, 1 January 2010, pages 1 to 159 is a technical specification document that provides details on the protocols and procedures utilised in Wi-Fi P2P networks.

### SUMMARY OF THE INVENTION

The present invention has been made to address at least the above problems and/or disadvantages and to provide at least the advantages described below. Accordingly, an aspect of the present invention provides a method and an apparatus in which a Wireless Docking Network (WDC) manages docking related information in a wireless docking network environment.

Another aspect of the present invention provides a method and an apparatus in which a WDC transmits peripheral information and information on an action which a Wireless Dockee (WD) can perform to the WD in a wireless docking network environment.

An additional aspect of the present invention provides a method and an apparatus in which, when an event is generated in a WDC, the WDC notifies a WD of the generation of the event in a wireless docking network environment.

A further aspect of the present invention provides a method and an apparatus in which a WD generates, modifies, and deletes a WDN in a wireless docking network environment.

Another aspect of the present invention provides a protocol method and an apparatus for reducing transmitted/received data between a WD and a WDN.

In accordance with an aspect of the present invention, a method is provided for managing a Wireless Docking Network (WDN) by a WDC. The WDC receives a creation request message for creating the WDN from a WD, the creation request message comprising a plurality of peripheral device IDs. The WDC identifies one or more of the plurality of peripheral devices based on the creation request message. The WDC creates the WDN based on the one or more of the plurality of peripheral devices. A response message including an identification, ID, of the WDN is transmitted from the WDC to the WD.

In accordance with another aspect of the present invention, a method is provided for managing a WDN by a WD. The WD transmits, to a Wireless Docking Center (WDC), a creation request message for creating the WDN, the creation request identifying a plurality of peripheral device IDs. The WD receives, from the WDC, a response message including an identification, ID, of the WDN created according to the creation request message.

In accordance with another aspect of the present invention, a WDC device is provided for managing a WDN. The WDC device includes a transceiver configured to receive, from a WD, a creation request message for creating the WDN, the creation request message comprising a plurality of peripheral device IDs. The WDC device also includes a controller configured to identify one or more of the plurality of peripheral devices based on the creation request message, create the WDN based on the one or more of the plurality of peripheral devices, and transmit, to the WD, a response message including an identification, ID, of the WDN.

In accordance with another aspect of the present invention, a WD device is provided for managing a WDN. The WD device includes a transceiver configured to transmit and receive signals. The WD device also includes a controller configured to control the transceiver to transmit, to a WDC, a creation request message for creating the WDN, the creation request message comprising a plurality of peripheral device IDs, and to control the transceiver to receive, from the WDC, a response message including an identification, ID, of the WDN created according to the creation request message.

In accordance with an additional aspect of the present invention, a system is provided for managing a WDN. The system includes a WDC device configured to receive, from a WD, a creation request message for creating the WDN, the creation request message comprising a plurality of peripheral device IDs, to identify one or more of the plurality of peripheral devices based on the creation request message, to create the WDN based on the one or more of the plurality of peripheral devices, and to transmit, to the WD, a response message including an identification, ID, of the WDN. The system also includes the WD device configured to transmit, to the WDC, the creation request message, and to receive, from the WDC, the response message.

In accordance with a further aspect of the present invention, an article of manufacture is provided for managing a WDN, including a machine readable medium containing one or more programs which when executed implement the steps of: receiving a creation request message for creating the WDN from a Wireless Dockee (WD), the creation request message comprising a plurality of peripheral device IDs; identifying one or more of the plurality of peripheral devices based on the creation request message; creating the WDN based on the one or more of the plurality of peripheral devices; and transmitting to the WD, a response message including an identification, ID, of the WDN.

In accordance with another aspect of the present invention, an article of manufacture is provided for managing a WDN, including a machine readable medium containing one or more programs which when executed implement the steps of: transmitting to a Wireless Docking Center (WDC), a creation request message for creating the WDN, the creation request message comprising a plurality of peripheral device IDs; and receiving from the WDC, a response message including an identification, ID, of the WDN created according to the creation request message.

### BRIEF DESCRIPTION OF THE DRAWINGS

The above and other aspects, features, and advantages of the present invention will be more apparent from the following detailed description when taken in conjunction with the accompanying drawings, in which:
FIG. 1 is a diagram schematically illustrating a structure of a general UPnP based docking stack;
FIGS. 2A and 2B are show a device description XML including information on a peripheral device, according to an embodiment of the present invention;
FIG. 3 shows a docking administrator service description XML including action information, according to an embodiment of the present invention;
FIG. 4 is a diagram illustrating an operation in which, when an event is generated in a docking data model, a WDC notifies of the event generation, according to an embodiment of the present invention;
FIG. 5 is a diagram illustrating a WDN related operation in a wireless docking system, according to an embodiment of the present invention;
FIG. 6 is a diagram illustrating a WDN related operation in a user mode, according to an embodiment of the present invention;
FIG. 7 is a diagram illustrating a WDN related operation in a manger mode, according to an embodiment of the present invention;
FIG. 8 is a diagram illustrating an operation of a WDC in a manger mode, according to an embodiment of the present invention;
FIG. 9 is a diagram illustrating an operation of a WD in a manger mode, according to an embodiment of the present invention;
FIG. 10 is a block diagram of a WDC server device operating in a manger mode, according to an embodiment of the present invention; and
FIG. 11 is a block diagram of a WD device operating in a manger mode, according to an embodiment of the present invention.

### DETAILED DESCRIPTION OF EMBODIMENTS OF THE PRESENT INVENTION

Embodiments of the present invention are described in detail with reference to the accompanying drawings. The same or similar components may be designated by the same or similar reference numerals although they are illustrated in different drawings. Detailed descriptions of constructions or processes known in the art may be omitted to avoid obscuring the subject matter of the present invention.

In the embodiments of the present invention, terms such as "include" and/or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

In the embodiments of the present invention, the expression "or" includes any or all combinations of words enumerated together. For example, the expression "A or B" may include A, may include B, or may include both A and B.

In the embodiments of the present invention, expressions including ordinal numbers, such as "first" and "second," etc., may modify various elements. However, such elements are not limited by the above expressions. For example, the above expressions do not limit the sequence and/or importance of the elements. The above expressions are used merely for the purpose of distinguishing an element from the other elements. For example, a first user device and a second user device indicate different user devices, although both of them are user devices. For example, a first element could be termed a second element, and similarly, a second element could be also termed a first element without departing from the scope of the present invention.

When a component is referred to as being "connected" to another component, it should be understood that not only is the component directly connected to the other component, but there may also exist another component between them. When a component is referred to as being "directly connected" to another component, it should be understood that there is no component therebetween.

The terms used herein are only used to describe specific embodiments of the present invention, and are not intended to limit the present invention. As used herein, the singular forms are intended to include the plural forms as well, unless the context clearly indicates otherwise.

Unless defined otherwise, all terms used herein, including technical and scientific terms, have the same meaning as commonly understood by those of skill in the art to which the present invention pertains. Such terms as those defined in a generally used dictionary are to be interpreted to have the meanings equal to the contextual meanings in the relevant field of art, and are not to be interpreted to have ideal or excessively formal meanings unless clearly defined herein.

Although embodiments of the present invention are divided for the convenience of description, two or more embodiments may be combined when the embodiments do not conflict with each other.

According to embodiments of the present invention, an entity may be embodied as an apparatus including a communication function, but the present invention is not limited thereto. For example, the electronic device may include at least one of a smartphone, a tablet PC, a mobile phone, a video phone, an electronic book (e-book) reader, a desktop PC, a laptop PC, a netbook computer, a Personal Digital Assistant (PDA), a Portable Multimedia Player (PMP), an MP3 player, a mobile medical appliance, a camera, and a wearable device (e.g., a Head-Mounted-Device (HMD) such as, for example, electronic glasses, electronic clothes, an electronic bracelet, an electronic necklace, an electronic appcessory, electronic tattoos, and a smartwatch).

According to some embodiments of the present invention, the electronic device may be embodied as a smart home appliance with a communication function. The smart home appliance may include at least one of, for example, a TV, a Digital Versatile Disk (DVD) player, an audio device, a refrigerator, an air conditioner, a vacuum cleaner, an oven, a microwave oven, a washing machine, an air cleaner, a set-top box, a TV box, a game console, an electronic dictionary, an electronic key, a camcorder, and an electronic picture frame.

According to some embodiments of the present invention, the electronic device may be embodied as various medical appliances (e.g., Magnetic Resonance Angiography (MRA), Magnetic Resonance Imaging (MRI), Computed Tomography (CT), and ultrasonic machines), navigation equipment, a Global Positioning System (GPS) receiver, an Event Data Recorder (EDR), a Flight Data Recorder (FDR), automotive infotainment device, electronic equipment for ships (e.g., ship navigation equipment and a gyrocompass), avionics, security equipment, a vehicle head unit, an industrial or home robot, an Automatic Teller Machine (ATM) of a banking system, and a Point Of Sales (POS) of a shop.

According to some embodiments of the present invention, the electronic device may be embodied as a part of furniture or a building/structure having a communication function, an electronic board, an electronic signature receiving device, a projector, and various kinds of measuring instruments (e.g., a water meter, an electric meter, a gas meter, a radio wave meter, and the like). The electronic device according to the present invention may be a combination of one or more of the aforementioned various devices. Also, the electronic device, according to the present invention, may be a flexible device. Further, it is obvious to those skilled in the art that the electronic device, according to the present invention, is not limited to the aforementioned devices.

An apparatus and a method provided by an embodiment of the present invention can be applied to various communication systems, such as, for example, a Long Term Evolution (LTE) mobile communication system, a LTE-Advanced (LTE-A) mobile communication system, a High Speed Downlink Packet Access (HSDPA) mobile communication system, a High Speed Uplink Packet Access (HSUPA) mobile communication system, a High Rate Packet Data (HRPD) mobile communication system of 3^{rd} Generation Project Partnership 2 (3GPP2), a Wideband Code Division Multiple Access (WCDMA) mobile communication system 3GPP2, a Code Division Multiple Access (CDMA) mobile communication system of 3GPP2, an IEEE 802.16m communication system, an Evolved Packet System (EPS), a Mobile Internet Protocol (Mobile IP) system, and the like.

Embodiments of the present invention may be performed based on various protocols. However, the embodiments of the present invention will be described based on a communication system supporting a DM protocol based on UPnP. Particularly, event notification described below may be provided based on a UPnP DM Configuration Management Service (CMS) or based on a "limited CMS" provided by the present invention.

For reference, UPnP defines CMS in which data may be stored and used in the format of a data model. Further, UPnP defines an event architecture based on a General Event Notification Architecture (GENA) used in the CMS. Any change to the data model may be an event for joined control points based on the architecture.

In embodiments of the present invention, the control point may be a WD or an administrator device. For reference, the WD may operate as an administrator device or a user device. The administrator device refers to a device having an operation mode that allows the WDC to perform a required operation, and the user device refers to a device having an operation mode in which a function of the administrator device cannot be performed. In the following description, it is assumed that the WD operates as the administrator device unless otherwise described. An administrator mode may be referred to as a "WD-centric mode" or an "administrator-centric mode", and a user mode may be referred to as a "user-centric mode".

A communication system supporting a UPnP protocol is advantageous in defining a wireless docking protocol between the WD and the WDC, since UPnP has all required frameworks that define actions and state variables and defines how to transmit actions, such as Simple Object Access Protocol (SOAP) messages, and events, such as GENA notifications. However, embodiments of the present invention are not limited to a UPnP DM protocol.

A wireless docking system to which embodiments of the present invention are applied is described in detail below.

A wireless device providing a wireless docking service in a wireless docking system is referred to as a WDC". For example, a notebook computer, a desktop computer, a tablet PC, a smart phone, or the like, may be the WDC and may perform a function of a server. A device using wireless docking services through the WDC is referred to as a WD. For example, a wireless terminal device such as a smart phone, a tablet PC, or the like, may be the WD. Further, devices, such as a mouse and a keyboard, connected to the WDC are referred to as peripheral devices. The peripheral devices may be connected to the WDC wirelessly or through a wire. For example, when a smart phone (WD) is wirelessly docked to a computer (WDC), the computer controls the peripheral device connected to the computer wirelessly or through a wire, so that a user of the smart phone can conveniently use the peripheral device. Meanwhile, WDs may be a group of peripheral devices. The group corresponds to a WDN.

The WDC may be connected to peripheral devices in a P2P scheme based on Wi-Fi, and may be a P2P Group Owner (GO). However, the WDC may be the P2P GO regardless of connections between the WDC and Wi-Fi based peripheral devices. Further, the WD may discover the WDC and join a group, in which the WDC is the GO, as a Group Client (GC).

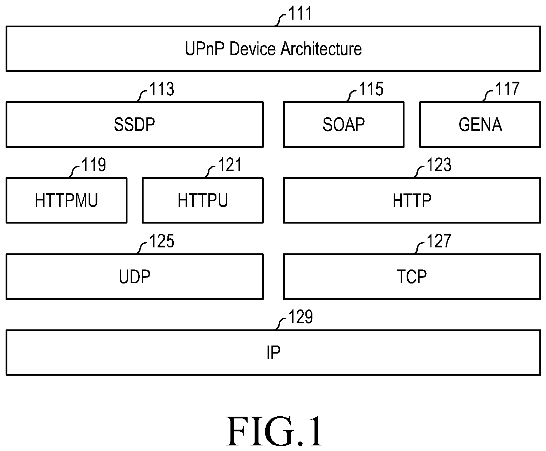

FIG. 1 is a diagram schematically illustrating a structure of a general UPnP based docking stack.

Referring to FIG. 1, the UPnP protocol stack includes a UPnP device architecture layer 111, a Simple Service Discovery Protocol (SSDP) layer 113, a Simple Object Access Protocol (SOAP) layer 115, a GENA layer 117, a Hyper Text Transfer Protocol Multicast over User Datagram Protocol (UDP) (HTTPMU) layer 119, an HTTP over UDP (HTTPU) layer 121, an HTTP layer 123, a UDP layer 125, a TCP layer 127, and an IP layer 129.

In embodiments of the present invention:
(1) The WDC stores and manages docking related information in a docking data model based on a UPnP DM protocol.
(2) The WDC broadcasts, to the WD, peripheral information and information on an action that the WD can perform.
(3) When a new event is generated in the WDC, the WDC notifies the event generation to the WD.
(4) The WD generates, modifies, and deletes the WDN.
(5) A limited CMS protocol.

In an embodiment of the present invention related to no. (1) above, the WDC generates a docking data model (hereinafter, also referred to as a "data model") including docking related information by using a UPnP DM CMS, and stores and manages the generated docking data model in the WDC. The wireless docking related information includes docking configuration information and control procedure related information. Examples of the docking data model are described in Table 1.

In an embodiment of the present invention related to no. (2) above, the WD may obtain information on peripheral devices (also referred to as "device information") broadcasted by the WDC, and information on an action (also referred to as "action information") that the WD can perform. When the WDC operates in an administrator mode in which the WD is an administrator device, the WDC may broadcast both the device information and the action information. When the WDC operates in a user mode in which the WD is a user device, the WDC may broadcast the device information.

In an embodiment of the present invention related to no. (3) above, when a new event is generated in the WDC, information on the generated event may be notified to the WD.

A first event may be the connection of a new peripheral device to the WDC, or the disconnection of a connected peripheral device. The event may be referred to as a "hot plug event". A second event may be a change in a state value of a parameter defined to generate an event among various pieces of information included in the data model.

Specifically, an example of the second event includes changes of state values of parameters defined as information that can generate an event among information on the WDC included in the data model, information on the peripheral device, information on the WDC, and information on the peripheral device connected to the WDN. For example, when it is assumed that the peripheral device is a refrigerator, the event may be a change in temperature around the refrigerator. In this case, when a value (that is, a state value) is ambient temperature (that is, a parameter including information on the peripheral device) of the refrigerator (that is, the peripheral), if a generation of such an event is notified to the WD, the WD may control the refrigerator (that is, the peripheral) according to the event corresponding to the change in the ambient temperature of the refrigerator.

In an embodiment of the present invention related to no (4) above, the WD controls a predetermined operation related to the WDN, such as, for example, a request for generating the WDN including a plurality of peripheral devices by using the device information and the action information described with respect to no. (2) above, a request for adding a new peripheral device to the generated WDN, a request for removing the peripheral device included in the WDN, a request for deleting the generated WDN, or a request for configuring the WDN. In an embodiment of the present invention, a service providing the operations is referred to as a UPnP docking administrator (DockingAdmin) service.

Embodiment of the present invention, related to no. (5) above, may be performed through a limited CMS function rather than a complete UPnP DM CMS function. That is, a docking service is performed using only some of the CMS functions required for the docking among all conventional UPnP DM CMS functions.

The description of no. (1) above, in which the WDC stores and manages docking related information in a docking data model based on a UPnP DM protocol, is set forth below.

The WDC generates a data model including various pieces of information related to the docking, and stores the generated data model in the WDN. The data model refers to a set of docking related information including hierarchical sets of parameters. Each of the parameters included in the data model include attribute information related to each of the parameters.

The UPnP CMS defines a service of processing (writing, reading, creating, or deleting) data as a data model. For reference, the data model of the UPnP CMS may be expressed by a logical tree of nodes, and a relationship between two continuous nodes that are connected to each other is referred to as a parent to child relationship. Further, a node refers to an element of a data model tree. One node may include a parent node and a child node. The nodes include a root node, a leaf node, a single instance node, a multi-instance node, an instance node, and the like. The root node is a node having no parent node. The leaf node is a node that has a parent node but does not have any child nodes. The single instance node is an intermediate node that has one parent node and may have one or more named child nodes forming a sub-tree below this node. The multi-instance node is a special intermediate node that may contain a set of instance nodes. The instance node represents a sort of table rows belonging to a parent multi-instance node.

Table 1 shows an example of a data model, according to an embodiment of the present invention, based on the UPnP CMS.

The data model expresses three types of nodes including the leaf node, the single instance node, and the multi-instance node. In Table 1, a "Name" item corresponds to a parameter name. Type, Acc, Version, and EventonChange (EoC) correspond to attributes, and a "Description" item corresponds to a description of a corresponding parameter.

**Table 1**

| **Name** | **Type** | **Acc.** | **Description** | **EoC** | **Versi on** |
|---|---|---|---|---|---|
| **/UPnP/DM/WDC/** | ***SingleInstance*** | **NA** | **Provides WDC related information in data model** | **NA** | **NA** |
| ListofChannels | string | R | List of available channels | 1 | - |
| OperatingFrequency | unsignedInt | W | Operation frequency of WDC | - | - |
| WDCCapabilities | string | R | Completed capability of WDC | - | - |
| NoOfDockeesSuppo rted | unsignedInt | W | Number of WDs which can be simultaneously connected to WDC | - | - |
| NoOfP2PGroups | unsignedInt | W | Number of P2P groups which can be simultaneously | - | - |
| | | | supported by WDC | | |
| NoOfWDNs | unsignedInt | W | Number of WDNs which can be supported by WDC at any time point | - | - |
| DualModeSupported | boolean | R | Indicates Whether WDC supports operation of dual mode or not | - | - |
| ConcurrentMode | boolean | R | Indicates whether concurrent mode (P2P + infrastructure) can be supported or not | - | - |
| PowerSavingModeS upported | Boolean | R | Indicates whether power saving mode is supported or not | - | - |
| PowerSavingModes | string | R | List of power saving modes supported by WDC | - | - |
| NoOfDockeesDocke d | unsignedInt | R | Number of WDs which are currently docked to WDC | 1 | - |
| UserID | string | R | List of user IDs supported by WDC | - | - |
| Password | string | R | Password used for accessing WDC | - | - |
| UserCentricWDNA1 lowed | boolean | R | Indicates whether WDC supports user-centric WDN (user generation dynamic WDN) | - | - |
| CapabilityMatching Allowed | boolean | R | Indicates whether WDC has capability to perform capability matching | - | - |
| **/UPnP/DM/WDC/P** | ***MultiInstance*** | **W** | **Provides peripheral** | **1** | - |
| **eripheral/#/** | | | **information in data model** | | |
| PeripheralID | string | R | Identifier of peripheral | - | - |
| FriendlyName | string | R | Friendly name of peripheral | - | - |
| Availability | boolean | R | Indicates whether peripheral can be docked or not | 1 | - |
| Shareability | boolean | R | Indicates whether peripheral can be shared or not | - | - |
| Vendor | string | R | Vendor of peripheral | - | - |
| Model | string | R | Model of peripheral | - | - |
| Version | string | R | Version of peripheral | - | - |
| IPAddress | string | R | IP address of peripheral | - | - |
| MACAddress | string | R | MAC address of peripheral | - | - |
| AssociatedWDNs | string | R | List of WDNs which this peripheral accesses | 1 | - |
| PFP | string | R | List of peripheral function protocols supported by peripherals and other related information | - | - |
| OperatingFrequency | string | R | Operation frequency supported by peripheral | - | - |
| PeripheralType | string | R | Type of peripheral such as mouse or keyboard | - | - |
| SecurityKey | string | R | PTK of peripheral connected to WDC | - | - |
| UserCentricWDNA1 lowed | boolean | R | Indicates whether peripheral can be part of user-centric WDN or not | - | - |
| **/UPnP/DM/WDC/ WDN/#/** | ***MultiInstance*** | **W** | **Provides WDN information in data model** | **1** | - |
| WDNID | string | R | Identifier of WDN assigned by WDC | - | - |
| WDNFriendlyName | string | W | Friendly name of WDN configured by WD/user | - | - |
| WDNType | string | W | Type of WDN such as OfficeWDN, HomeWDN, or CarWDN configured by admin /user | - | - |
| AccessControlList (WL, BL) | string | W | List of WD IDs indicating white list and black list | - | - |
| Availability | boolean | R | Indicates whether WDN can be docked or not | 1 | - |
| **/UPnP/DM/WDC/ WDN/**#**/Peripheral/** #/ | ***MultiInstance*** | **W** | **Provide information on peripherals accessing WDN in data model** | **1** | - |
| PeripheralID | string | R | ID of peripheral accessing this WDN | - | - |
| Availability | boolean | R | Available state of peripheral in this WDN. Since peripheral may be part of multiple WDNs, peripheral may be used in only one WDN at particular time point but may not be used in others. | 1 | - |

The parameter attributes of Table 1 are described in detail below.
- Type: indicates which type of node is included in the data model. For example, when a SOAP is used as a protocol for data access to the incase of the UPnP, a data type may include SOAP data types such as, for example, string, integer (int), unsigned integer (unsignedInt), Boolean, and the like.
- Acc: indicates an accessible range of a corresponding parameter. Specifically, it indicates "Reading (R)" or "Writing (W)". Reading (R) of the leaf node means that a predetermined Control Point (CP) can only read a corresponding parameter, and Writing (W) means that the corresponding CP can read the parameter and also change the parameter. Writing (W) of the multi-instance node means that the corresponding CP can create a new instance. For reference, the CP refers to an entity of a network in UPnP.
- EoC: indicates whether a change of a particular parameter is an event of the CP. When the change of the corresponding parameter is the event of the corresponding CP, EoC of the corresponding parameter may be "1". When the change of the corresponding parameter is not the event of the corresponding CP, EoC may be "0".
- Version: indicates a number of times that a corresponding parameter is changed. That is, it indicates a number of changes of the corresponding parameter, and "1" may be configured by default.

When docking related data is processed through the data model of Table 1, according to an embodiment of the present invention, a large amount of data can be easily managed within the data model. Further, separate data models for other PFPs may be independently defined. For example, separate data models may be defined for Miracast, WSB, and Universal Serial Bus (USB) peripheral function protocols.

Various protocols may be used to manage data of the data model described in Table 1. For example, Open Mobile Alliance (OMA), DM, UPnP DM, and BroadBand Forum (BBF) Technical Report (TR)-069 may be used. Further, a protocol defined as the limited CMS, in connection with no. (5) above, may also be used.

The description of no. (2) above, in which the WDC broadcasts to the WD peripheral information and information on an action which the WD can perform, is set forth below.

The WDC may generate peripheral information including information on a peripheral device, and transmit the generated peripheral information to the WDC. The transmission may be performed in the form of broadcasting. Further, the peripheral information may be generated using an XML.

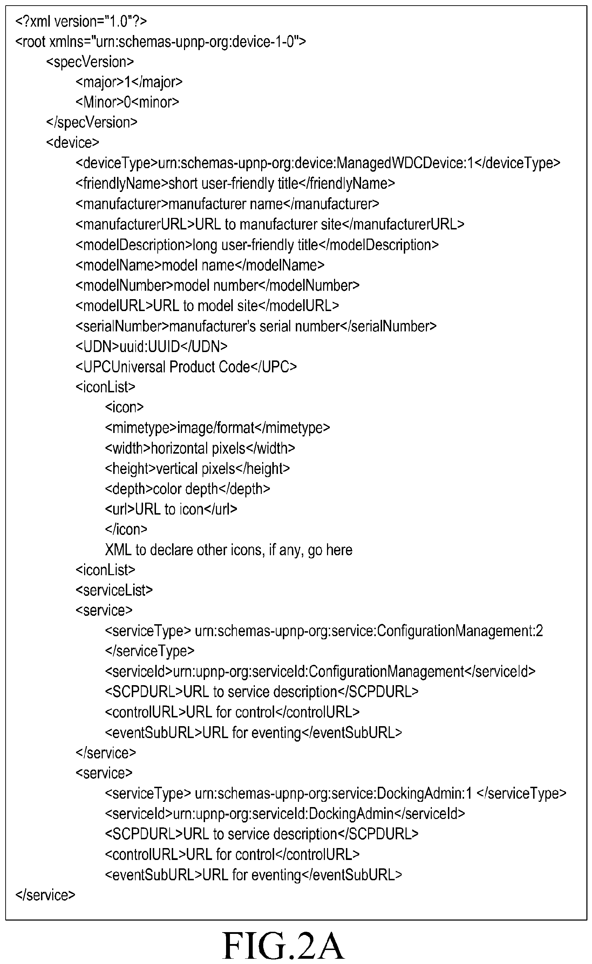

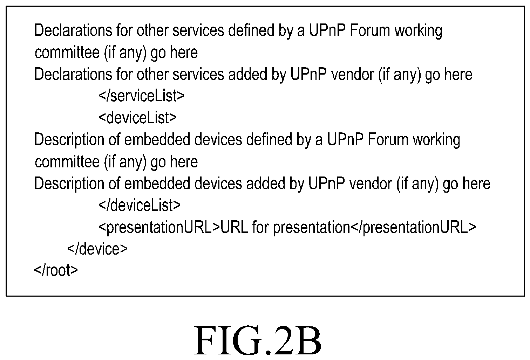

FIGS. 2A and 2B are views describing a "device description XML" including information on a peripheral device, according to an embodiment of the present invention.

FIGS. 2A and 2B are a single XML form document and are divided only for convenience. Referring to FIGS. 2A and 2B, a <service> item is included in a <device> item and a <serviceList> item. Through such an XML document, a description of the peripheral device and a description indicating which service is provided by a corresponding peripheral device may be transmitted to the WD in the form of broadcasting. Meanwhile, configuration information of a corresponding peripheral device and information on a service provided by the corresponding peripheral device may be obtained using information on the peripheral device.

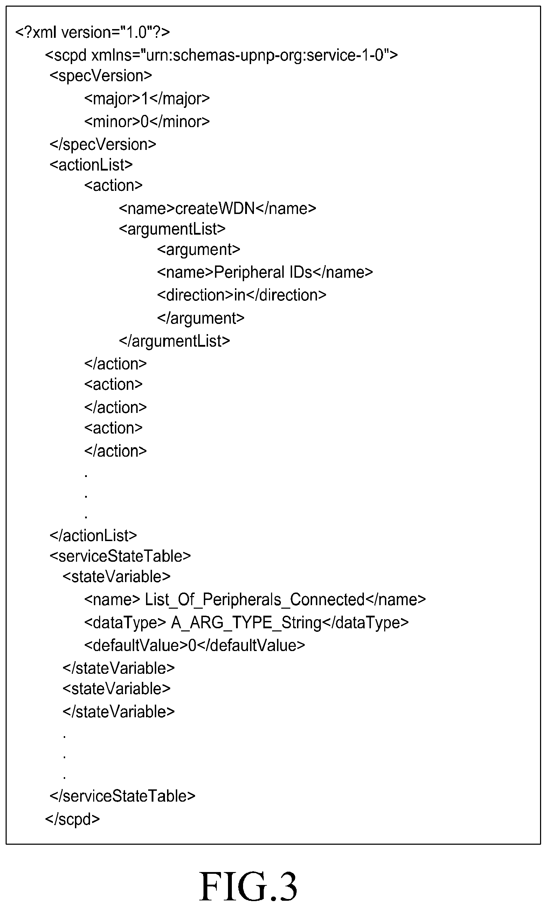

FIG. 3 shows a docking administrator service description XML including action information, according to an embodiment of the present invention.

Referring to a document in the XML form of FIG. 3, a plurality of <actions> items may be included in an <actionList> item. The actions indicate information on operations for the WDC, which are performed by the WD. Through the XML document, information on the operations performed by WD may be transmitted to the WD in the form of broadcasting.

A reason why the action information is broadcasted to the WD is to perform required actions by the WD that allow the WDC to prepare the docking before the WD performs the docking, when the WD operates as an administrator device. For reference, the administrator device is a device that can control the data model stored in the WDC. When the WD is the administrator device, the WD is required to know information on an operation that the WD can perform for the WDC. Providing available operations of the WD is referred to as a UPnP docking administrator (DockingAdmin) service. Operations of the UPnP docking administrator service provided by the present disclosure include a WDN creation request, a WDN modify (adding or removing a peripheral device) request, a WDN deletion request, and a WDN configuration request. The operations are described in greater detail below.

The description of no. (3) above, in which the WDC notifies the WD of the event generation of the connection/disconnection, when an event of connection or a disconnection of a new peripheral device is generated in the WDC, is set forth below.

The UPnP DM defines a Configuration Management Service (CMS) and a CMS description XML in a UPnP standard. The UPnP DM CMS defines a service of processing (writing, reading, creating, or deleting) data as a data model. Further, UPnP defines an architecture in which the event generation can be notified based on a GENA used in the CMS. For reference, the GENA is a protocol for transmitting/receiving notification between entities. Based on the architecture, when any change in the data model is generated, the change may be an event for CPs. In an embodiment of the present invention, the WD may be the CP.

In an embodiment of the present invention, the WDC may provide access to the docking data model to the WD. However, the WDC may authenticate the WD before the WD accesses the data model. The CMS service provides state parameters that transmit at least one event to the WD. Further, the CMS service may consider changes in the data model as events. For example, a new peripheral device may be added to the WDC or an already connected peripheral device may be removed. Such an addition or removal of the peripheral device may be an event, and the event is hereinafter referred to as a "hot plug event".

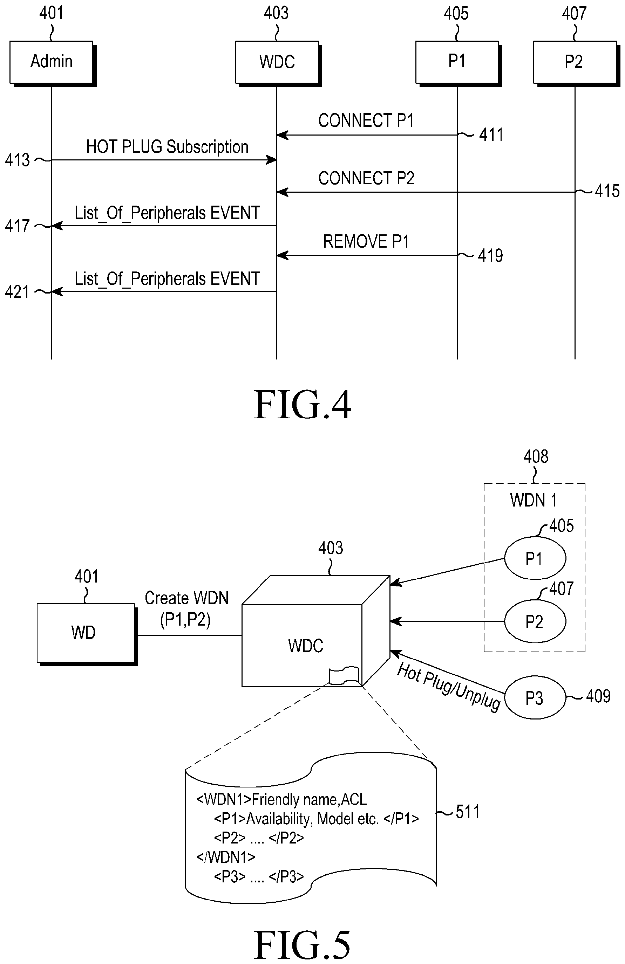

FIG. 4 is a diagram illustrating an operation in which the WDC notifies of an event generation, when an event is generated in a docking data model, according to an embodiment of the present invention.

In FIG. 4, it is assumed that there are two peripheral devices including a first peripheral device 405 and a second peripheral device 407. When the first peripheral device 405 and the second peripheral device 407 are connected to or disconnected from a WDC 403, the WDC 403 notifies an administrator, or WD, 401 of the connection and/or the disconnection. In order to notify the WD 401 of the event, the WD 401 is required to transmit a hot plug subscription message that makes a request for notification to the WDC 403, in an embodiment of the present invention.

Referring to FIG. 4, the first peripheral device 405 is connected to the WDC 403, in step 411. In step 413, the WD 401 transmits the hot plug subscription message to the WDC 403. Since the WD 401 has transmitted the hot plug subscription message, the WDC 403 can notify the WD 401 of an event to be generated later. In step 415, the second peripheral device 407 is connected to the WDC 403. Since a subscription event of the second peripheral device 407 is generated, the WDC 403 transmits a peripheral event list message, including subscription event information of the second peripheral device 407, to the WD 401, in step 417. In step 419, the connection of the first peripheral device 405 is disconnected. Accordingly, the WDC 403 transmits a peripheral event list message, including disconnection event information of the first peripheral device 405, to the WD 401, in step 421.

The aforementioned hot plug event may update the data model and may be transmitted to the WD by using an architecture for an event of the UPnP DM CMS. That is, when a new peripheral device is connected to the WDC, i.e., when a new peripheral is plugged-in, a new instance for the corresponding peripheral device may be generated in an item of "/UPnP/DM/WDC/Peripheral/#/" of the data model of Table 1. In contrast, when a peripheral device, which has been conventionally connected to the WDC and has been included in the WDN as information on a docking data model, is disconnected from the WDC, i.e., the peripheral device is unplugged, an instance of the corresponding peripheral device is removed from the docking data model.

Alternatively, the WD may be notified of hog plug events by using an event of the docking administrator (DockingAdmin) service. That is, "List_Of_Peripherals_Connected" is updated whenever a new peripheral device is added to the WDC or a conventional peripheral device is removed from the WDC, and a plug in event may be notified through transmission of the updated "List_Of_Peripherals_Connected" to the WD.

An example is set forth below in which, when a particular parameter value of the data model, other than the hog plug event, is changed for any reason, the change event is notified to the WD. However, a case in which the change in the parameter value is the event corresponds to a case in which an EoS attribute value of the corresponding parameter is configured as "1". The following description is made based on the parameter of Table 1.

The WDC may record at least one channel, which is not currently used and has interference, i.e., a channel that can be used. Such information may be indicated using "/UPnP/DM/WDC/ListOfChannels" of Table 1.

The WDC may record the number of WDs that are docked to the WDC at any time point. Such information may be indicated using "/LTPnP/DM/WDC/NoOfDockeesDocked" of Table 1.

The WDC may record an available state of the peripheral device. Such information may be useful information in a state in which the peripheral device can be discovered but cannot be currently used. The information may be indicated using "/UPnP/DM/WDC/Peripheral/#/Availability" of Table 1.

The WDC may record WDNs connected to a particular peripheral device. Such information may be indicated using "/UPnP/DM/WDC/Peripheral/#/AssociatedWDNs" of Table 1.

The WDC may record an available state of the WDN. Such information may be useful information in a state in which the WDN can be discovered but cannot be currently used. The information may be indicated using "/UPnP/DM/WDC/WDN/#/Availability" of Table 1.

Whenever the above-described parameters are changed, the data model of Table 1 is updated. Accordingly, the WD should be notified of an update event of the data model. Notification of a data model update event is made in embodiments of the present invention. The WD, which has subscribed to the CMS service, may be notified of the data model update event.

The description of no. (4) above, in which the WD creates, modifies, and deletes the WDN by using peripheral device information and action information, is set forth below.

FIG. 5 is a diagram illustrating a WDN related operation in a wireless docking system, according to an embodiment of the present invention.

The WDC 403 generates a data model 511 for a wireless docking system through a message exchange between peripheral devices 405, 407, and 409 and the WD 401 of the wireless docking system, according to an embodiment of the present invention, and stores the generated data model 511 in a memory within the WDC 403. The data model 511 may include information for the wireless docking, such as, for example, information on the WDC, information on the peripheral device, information on the WDN, information on the peripheral device connected to the WDN, and the like.

In FIG. 5, there are three peripheral devices 405, 407, and 409, and the WDC 403 is currently connected to the first peripheral device 405 and the second peripheral device 407. The WDC 403 may store information on the two peripheral devices 405 and 407 in the data model 511.

The WD 401 may access the data model 511 generated by the WDC 403 or obtain information included in the data model 511. An access scheme of the data model or an information obtaining scheme is not particularly limited. For example, the scheme may include a request of the WD 401 and a response of the WDC 403 to the request, or the WDC 403 may transmit the corresponding information to the WD 401 without any request of the WD 401.

The WD 401 may make a request, to the WDC 403, for generating a plurality of peripheral devices by one network based on information of the data model 511. FIG. 5 illustrates that the WD 401 transmits a "create WDN (P1, P2)" message to the WDC 403 to request generation of the first peripheral device 405 and the second peripheral device 407 as one group. Having received the request, the WDC 403 generates a first WDN 408 by tying the first peripheral device 405 and the second peripheral device 407 into one group. The WDC 403 updates information on the generated first WDN 408 in the data model 511. Accordingly, the WD 401 may obtain information on the peripheral devices 405, 407, and 409 included in the data model and may know of the existence of the peripheral devices 405, 407, and 409 and services provided by the corresponding peripheral devices 405, 407, and 409.

For example, it is assumed that the first peripheral device 405 is a printer and the second peripheral device 407 is a TV. The WD 401 may know of the existence of the printer, the TV, and a refrigerator over the network, and makes a request, to the WDC 403, for generating one network for the printer and the TV. The WDC 403 creates a WDN including the corresponding devices.

In FIG. 5, when the third peripheral device 409 is connected to the WDC 403, or is plugged-in, the WDC 403 updates information on the third peripheral device 409 in the data model 511. When the third peripheral device 409 is connected to the WDC 403 and then disconnected from the WDC 403, or is unplugged, the WDC 403 updates information on the disconnection of the third peripheral device 409 in the data model 511. The update in the data model due to the connection or the disconnection of the peripheral device is defined as a "hot plug event". When the hot plug event is generated, the WDC 403 may inform the WD 401 of the event generation. However, in an embodiment of the present invention, only when the WD 401 makes a request, to the WDC 403, to be informed in advance of the event generation, is the WD 401 notified of the event generation.

The WD 401 having known of the connection of the third peripheral device 409 to the WDC 403, according to the notification of the hot plug event, may make a request, to the WDC 403, for inserting a new peripheral corresponding to the third peripheral device 409 into the generated first WDN 408. The request may be made by transmitting an additional request message (addToWDN) to the WDC 403. In contrast, the WD 401 may make a request, to the WDC 403, for removing at least one of the peripheral devices included in the first WDN 408. The request may be made by transmitting a removal request message (removeFromWDN) to the WDC 403. The WD 401 may make a request, to the WDC 403, for deleting the first WDN 408. The request may be made by transmitting a deletion request message (deleteWDN) to the WDC 403. Further, the WD 401 may additionally make a request, the WDC 403, for configuring the first WDN 408. The request may be made by transmitting a configuration request message (configureWDN) to the WDC 403. Having received the messages and having completed operations corresponding to the messages, the WDC 403 reflects states after the corresponding operations to update the data model 511.

Embodiments of the present invention describing use of the messages are described in detail below.

The WD may transmit a WDN creation request message including a plurality of peripheral device IDs to the WDC. The WDC, having received the WDN creation request message, groups a plurality of peripheral devices indicated by the peripheral device IDs as the WDN. Thereafter, the WDC generates a WDN ID and transmits a response message including the generated WDN ID to the WD. When the WDN is completely generated, the WDC generates WDN information describing the generated WDN, and stores the generated WDN information in the data model. An example of a format of the WDN creation request message is set forth below.

### createWDN (peripheral IDs)

When the WDC supports user-centric docking, the WD may generate WDN information. However, in the user-centric docking, only the WD having generated the WDN information is allowed to access the corresponding WDN information, and other WDs may not be allowed to access the corresponding WDN information.

Accordingly, the WDN creation request message may include information indicating whether the WDN information can be accessed by all WDs. An example of a format of the WDN creation request message is set forth below.

### createWDN (peripheral IDs, free)

Specifically, "createWDN (peripheral IDs, free)" may further include a Boolean input parameter "free" as well as the peripheral device ID. The parameter "free" indicates whether the WDN information can be accessed by all WDs or accessed by only the WD having made a request for creating the WDN.

The WD may make a request for adding new peripheral devices to the already generated WDN by transmitting, to the WDC, the addition request message (addToWDN) including one or more peripheral device IDs. In general, when the WD is notified, by the WDC, that a new peripheral device is connected to the WDC, the WD transmits the addition request message to the WDC. An example of a format of the peripheral addition request message is set forth below.

### addToWDN (WDN ID, peripheral IDs)

The WD may make a request for removing at least one of the peripheral devices included in the WDN by transmitting the removal request message (removeFromWDN) to the WDN. In general, when the WD is notified, by the WDC, of an event corresponding to a removal or a disconnection of a particular peripheral device, the WD transmits the peripheral removal request message to the WDC.

Further, even when the WDC does not receive the peripheral device removal request message from the WD, the WDC may automatically re-configure the whole WDN by removing the corresponding peripheral device to be removed or disconnected, from the data model of the WDN. An example of a format of the peripheral device removal request message is set forth below. The peripheral device removal request message includes a WDN ID and one or more peripheral device IDs. The format makes a request for removing the corresponding peripheral device from the corresponding WDN.

### removeFromWDN (WDN ID, peripheral IDs)

Another format of the peripheral device removal request message is set forth below. The format includes only one peripheral device ID. The format makes a request for removing the corresponding peripheral device from all WDNs connected to the peripheral device.

### removeFromWDN (peripheral ID)

The WD makes a request for deleting the WDN from the WDC by transmitting, to the WDC, the WDN deletion request message including one or more WDN IDs. The WDC, having received the request, may completely delete the corresponding WDC information from the data model. An example of a format of the WDN deletion request message is set forth below.

### deleteWDN (WDN IDs)

The WD makes a request for configuring the WDN by transmitting the WDN configuration request message to the WDC. The WDN configuration request message may include a WDN ID and configuration information of at least one WDN as an input parameter. The WDC having received the WDN configuration request message configures the WDN according to the corresponding configuration information. An example of a format of the WDN configuration request message is set forth below.

### configureWDN (WDN ID, Config. File)

An embodiment of the present invention relating to no. (5) above, including the "limited CMS protocol", is described in greater detail below.

The above-described embodiments of the present invention may be implemented using the "limited CMS protocol" as well as other DM protocols such as, for example, the OMA DM protocol, the UPnP DM protocol, and the BBR TR069 protocol. That is, the embodiments of the present invention are implemented using the UPnP DM CMS protocol. However, in addition to the UPnP DM CMS protocol, two different schemes may be used, as set forth below.

According to an embodiment of the present invention, the docking administrator service may include a limited CMS function rather than a complete UPnP DM CMS function. The limited CMS function includes two new Get operations performed on the docking data model and a state parameter.

A first Get operation has a function similar to a getSupportedParameters() CMS operation defined by the UPnP DM. Such an operation restores a structure of the data model, i.e., all parameters supported as the docking data model.

A second Get operation has a function similar to a getValues() CMS operation defined by the UPnP DM. Such a Get operation restores data from the data model. That is, values of the parameters within the data model are restored based on the selected input parameter. Further, a state parameter that transmits an event corresponding to all types of changes to the data model is defined.

When data to be managed by the WDC is limited, the data is not required to be managed using the data model. In this embodiment of the present invention, instead of using the general Get operations defined by the limited CMS function or the UPnP DM CMS function, particular get operations for restoring data, such as, for example, getPFdata() or getWDNData(), may be used.

The getPFData() operation is used to obtain data on one or more peripheral devices connected to the WDC. Such an operation uses a peripheral device ID connected to the WDC or a set of peripheral device IDs as the input parameter. It also indicates "all" within the input parameter, which can collect information on all peripheral devices.

The getWDNData() operation is used to obtain data on one or more WDNdp connected to the WDC. Such an operation uses a WDN ID connected to the WDC or a set of WDN IDs as the input parameter. Further, it may indicate "all" within the input parameter, which can restore information on all WDNs.

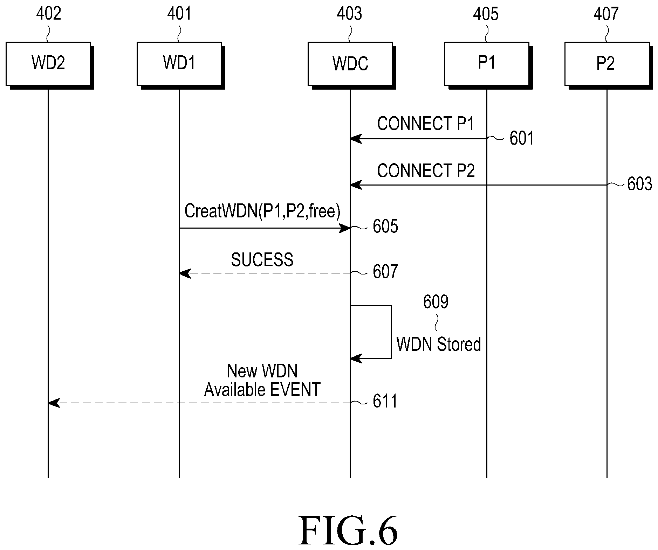

FIG. 6 is a diagram illustrating a WDN related operation in a user mode, according to an embodiment of the present invention.

The steps of FIG. 6 do not have to be performed as illustrated in FIG. 6, and temporal orders of the steps may be changed as long as the steps are not contradictory to each other or do not collide with each other. Further, certain steps may not be necessary and may be omitted when all operations of the present invention are not affected.

In steps 601 and 603, the first peripheral device 405 and the second peripheral device 407 are connected to the WDC 403. The WD 1 401 transmits a WDN creation request message, including the first peripheral device 405 and the second peripheral device 407, to the WDC 403. The WDC 403 creates the WDN according to the WDN creation request message.

In step 607, the WDC 403 transmits a message (success) informing that the creation of the WDN was completed. In step 609, the WDC 403 generates and stores a WDN data model, as shown in Table 1.

In step 611, The WDC 403 transmits a "new WDN available event" message to a second WD 402 connected to the WDC 403 to inform that a new WDN of the WDN data model stored in step 609 is generated and available. The second WD 402 receives the message, and connects itself to the newly generated WDN as necessary. Then, the second WD 402 can use the first peripheral device 405 and the second peripheral device 407 configured into one group.

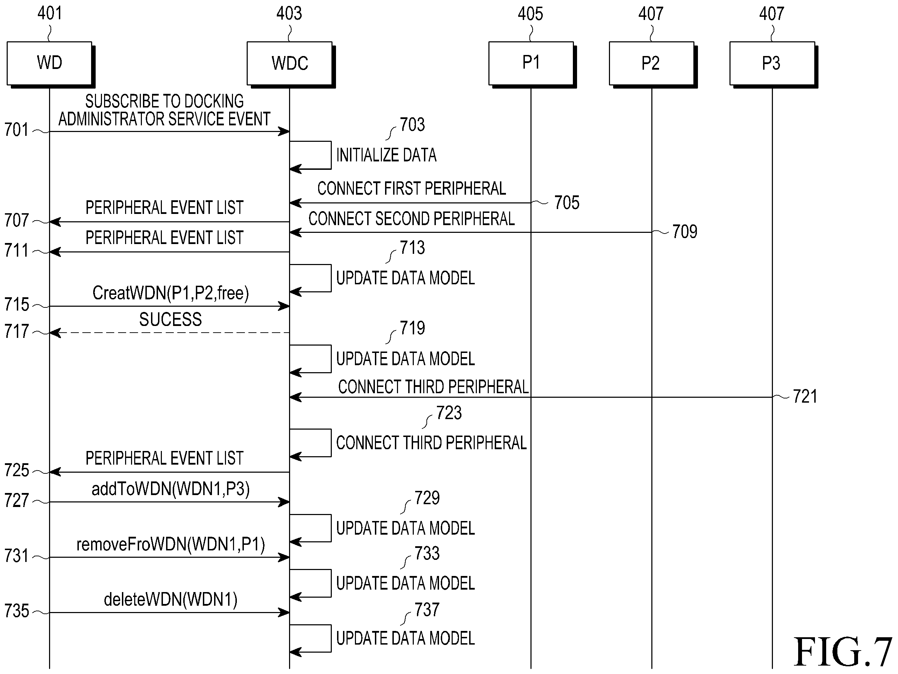

FIG. 7 is a diagram illustrating a WDN related operation in a manger mode, according to an embodiment of the present invention.

The steps of FIG. 7 do not have to be performed as illustrated in FIG. 6, and temporal orders of the steps may be changed as long as the steps are not contradictory to each other or do not collide with each other. Further, steps that may not be necessary may be omitted when all operations of the present invention are not affected.

In FIG. 7, it is assumed that the WDC 403 broadcasts action information before or after step 701, and accordingly, the WD 401 may obtain the action information.

Referring to FIG. 7, the WD 401, operating as the administrator device, transmits a docking administrator service event subscription message to the WDC 403, in step 701. In step 703, the WDC 403 initiates the docking data model. In some embodiments of the present invention, step 703 can be omitted. In step 705, the first peripheral device 405 is connected to the WDC 403. Accordingly, the WDC 403 transmits, to the WD 401, peripheral device event list information informing that the first peripheral device 405 is connected, in step 707. In step 709, the second peripheral device 407 is connected. Accordingly, the WDC 403 transmits, to the WD 401, peripheral device event list information informing that the second peripheral device 407 is connected, in step 711. Since the first peripheral device 405 and the second peripheral device 407 are connected, the WDC 403 reflects information on the first peripheral device 405 and the second peripheral device 407 in the data model to update the data model.

However, if step 701 is performed after step 709, steps 707 and 711 may not be performed. Instead, the WDC 403 broadcasts device information on the peripheral devices before step 715, so that the WD 401 may obtain the information on the peripheral devices.

In step 715, the WD 401 transmits, to the WDC 403, a WDN creation request message including IDs of the first peripheral device 405 and the second peripheral device 407 by using action information, peripheral information, or event information. Accordingly, the WDC 403 generates the first WDN by tying the first peripheral device 405 and the second peripheral device 407 into one group, and transmits a WDN creation completion message, in step 717. The creation completion message includes an ID of the generated first WDN. Thereafter, the WDC 403 reflects information on the generated first WDN in the data model to update the data model. In step 721, the third peripheral device 409 is connected to the WDC 403. In step 723, the WDC 403 reflects device information of the third peripheral device 409 in the data model to update the data model. Thereafter, the WDC 403 transmits, to the WD 401, peripheral event list information that informs that the third peripheral device 409 is connected, in step 725. In step 727, the WD 401 transmits, to the WDC 403, a peripheral additional message including the ID of the third peripheral device 409 and the ID of the first WDN in order to add the third peripheral device 409 to the first WDN. In step 729, the WDC 403 adds the third peripheral device 409 to the first WDN and updates the data model. In step 731, the WD 401 transmits, to the WDC 403, a peripheral device removal message including the ID of the first peripheral device 405 and the ID of the first WDN in order to remove the first peripheral device 405 from the first WDN. In step 733, the WDC 403 removes the first peripheral device 405 from the first WDN and updates the data model. In step 735, the WD 401 transmits, to the WDC 403, the WDN deletion request message including the ID of the first WDN in order to delete the first WDN. In step 737, the WDC 403 deletes the first WDN and updates the data model.

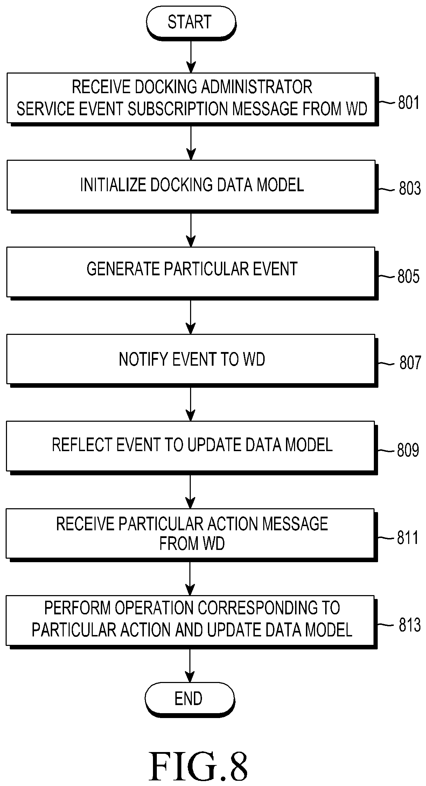

FIG. 8 is a diagram illustrating an operation of the WDC in a manger mode, according to an embodiment of the present invention.

The steps of FIG. 8 do not have to be performed as illustrated in FIG. 6, and temporal orders of the steps may be changed as long as the steps are not contradictory to each other or do not collide with each other. Further, steps that are not necessary may be omitted when all operations of the present invention are not affected.

In FIG. 8, it is assumed that the WDC 403 may broadcast action information before or after step 801, and accordingly, the WD 401 may obtain the action information.

Referring to FIG. 8, the WDC 403 receives a docking administrator service event subscription message from the WD 401 operating as the administrator device, in step 801. In step 803, the WDC 403 initiates the docking data model. In other embodiments of the present invention, step 803 can be omitted. In step 805, a particular event, corresponding to a connection of a plurality of peripheral devices to the WDC 403, is generated. Accordingly, in step 807, the WDC 403 transmits, to the WD 401, event list information for informing of a particular event. The event may be a hot plug event or a data model change event.

However, if step 801 is performed after step 805, step 807 may not be performed. Instead, the WDC 403 broadcasts device information on the peripheral devices before step 809, so that the WD 401 may obtain the information on the peripheral devices.

In step 809, the WDC 403 reflects the information on the peripheral devices in the data model to update the data model. In step 811, the WDC 403 receives a particular action message from the WD 401. In step 813, the WDC 403 performs an operation corresponding to the particular action and updates the data model. The particular action may be WDN creation, peripheral device addition, peripheral device removal, WDN deletion, WDN configuration, or the like.

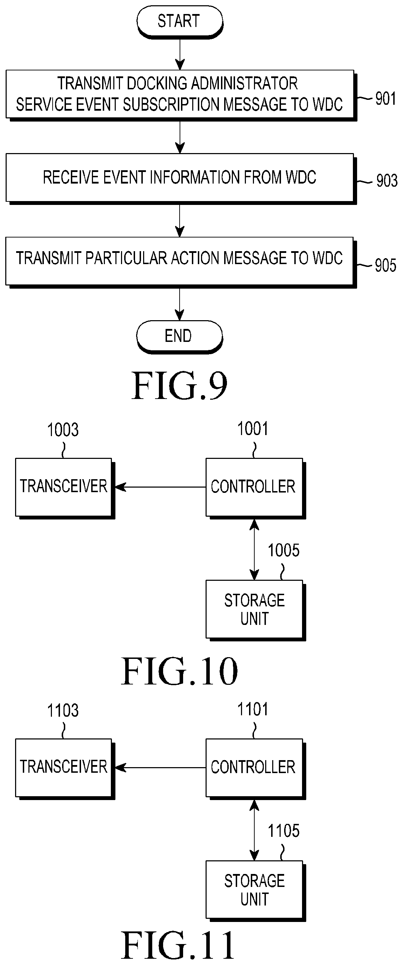

FIG. 9 is a diagram illustrating an operation of the WD in a manger mode, according to an embodiment of the present invention.

The steps of FIG. 9 do not have to be performed as illustrated in FIG. 6, and temporal orders of the steps may be changed as long as the steps are not contradictory to each other or do not collide with each other. Further, steps that are not necessary may be omitted when all operations of the present invention are not affected.

In FIG. 9, it is assumed that the WD 401 may receive action information before or after step 901, and accordingly the WD 401 may obtain the action information.

Referring to FIG. 9, the WD 401 transmits a docking administrator service event subscription message to the WDC 403, in step 901. In step 903, the WD 401 receives, from the WDC 403, event list information for informing of a particular event. The event may be a hot plug event or a data model change event.

However, if step 901 is performed after the particular event is generated in the WDC 403, step 903 may not be performed. Instead, the WDC 403 broadcasts device information of the peripheral devices before step 905, so that the WD 401 may obtain the information on the peripheral devices.

In step 905, the WD 401 transmits a particular action message to the WDC 403. The particular action may be WDN creation, peripheral device addition, peripheral device removal, WDN deletion, WDN configuration or the like.

FIG. 10 is a block diagram illustrating a WDC server device in a manger mode, according to an embodiment of the present disclosure.

In FIG. 10, the WDC server device implements the above-described embodiments of the present invention.

A transceiver 1003 transmits/receives a signal to/from external entities. A storage unit 1005 stores the data model.

A controller 1001 broadcasts action information and device information through the transceiver 1003. When the controller 1001 receives an action request from the WD, the controller 1001 performs an action corresponding to the action request and manages the data model by, for example, updating the data model. Further, the controller 1001 determines whether an event is generated, generates event information according to the determination, and transmits the event information to the WD.

The controller 1001 may be implemented using software and/or firmware. The software and/or firmware may be stored within a memory (non-volatile memory) of the electronic device and executed by a processor. Alternatively, the controller 1001 may be implemented by a combination of two or more of software, firmware, and hardware.

FIG. 11 is a block diagram illustrating a WD device in a manger mode, according to an embodiment of the present invention.

In FIG. 11, the WD device implements the above-described embodiments of the present invention.

A transceiver 1103 transmits/receives a signal to/from external entities. A storage unit 1105 stores action information and device information. A controller 1101 receives action information, device information, and event information through the transceiver 1103, and transmits an action request to the WDC by using the received information.

The controller 1101 may be implemented using software and/or firmware. The software and/or firmware may be stored within a memory (non-volatile memory) of the electronic device and executed by a processor. Alternatively, the controller 1101 may be implemented by a combination of two or more of software, firmware, and hardware.

When the embodiments of the present invention are implemented based on the above-described UPnP DM CMS, the following advantages are provided.

First, using the data model makes data management easier. Second, conventional DM protocols have been well known as frameworks standardized for the event and data management. Third, new operations for grouping peripheral devices make management of the peripheral devices easier.

Particular aspects of the present invention may be implemented as a computer-readable code in a computer-readable recording medium. The computer-readable recording medium is a predetermined data storage device, which can store data that can be read by a computer system. The computer-readable recording medium may include a Read-Only Memory (ROM), a Random-Access Memory (RAM), CD-ROMs, magnetic tapes, floppy disks, optimal data storage devices, and carrier waves (such as, data transmission through the Internet). The computer-readable recording medium may be distributed through computer systems connected to the network, and accordingly, the computer-readable code is stored and executed in a distributed manner. Further, functional programs, codes, and code segments to achieve the embodiments of the present invention may be easily interpreted by programmers skilled in the art.

Any such software may be stored, for example, in a volatile or non-volatile storage device such as a ROM, a memory such as a RAM, a memory chip, a memory device, or a memory Integrated Circuit (IC), a recordable optical or magnetic medium such as a CD, a DVD, a magnetic disk, or a magnetic tape, regardless of its ability to be erased or its ability to be re-recorded, and a machine readable storage medium, e.g., a computer readable storage medium. It can be also appreciated that the memory included in the mobile terminal is one example of machine-readable devices suitable for storing a program including instructions that are executed by a processor device to thereby implement embodiments of the present invention.

Accordingly, embodiments of the present invention include a program including a code for implementing the described apparatus and methods, and a machine (a computer or the like)-readable storage medium for storing the program. Moreover, such a program may be electronically transferred through a specific medium, such as a communication signal transferred through a wired or wireless connection, and the present invention properly includes the equivalents thereof.

The program providing apparatus may include a program including instructions through which a graphic processing apparatus implements a preset content protecting method, a memory for storing information or the like required for the content protecting method, a communication unit for performing wired or wireless communication with the graphic processing apparatus, and a controller for transmitting the corresponding program to a transceiver according to a request of the graphic processing apparatus or automatically.

While the invention has been described with reference to certain embodiments thereof, it will be understood by those skilled in the art that various changes in form and detail may be made therein without departing from the scope of the invention as defined by the appended claims.

## Claims

1. A method of managing a wireless docking network, WDN, by a wireless docking center, WDC, (403) the method comprising the steps of:
receiving, at the WDC (403), a creation request message for creating the WDN from a wireless dockee, WD, (401), the creation request message comprising a plurality of peripheral device (405, 407, 409) IDs; the method being further chracterised by the steps of
identifying, at the WDC (403), one or more of the plurality of peripheral devices (405, 407, 409) based on the creation request message;
creating, at the WDC (403), the WDN based on the one or more of the plurality of peripheral devices (405, 407, 409); and
transmitting, from the WDC (403), to the WD (401), a response message including an identification, ID, of the WDN.

2. The method of claim 1, further comprising:
receiving, at the WDC (403), from the WD (401), a modify request message including the ID of the WDN for modifying the WDN;
modifying the created WDN according to the modify request message; and
transmitting, from the WDC (403), to the WD (401), a response message corresponding to the modify request message.

3. The method of claim 2, wherein modifying the WDN comprises adding one or more of the plurality of peripheral devices (405, 407, 409) to the WDN, when the modify request message includes IDs of the plurality of peripheral devices (405, 407, 409).

4. The method of claim 2, wherein modifying the WDN comprises removing a peripheral device (405, 407, 409) from the WDN, when the modify request message includes an ID of the peripheral device (405, 407, 409) within the WDN.

5. The method of claim 1, further comprising:
receiving, at the WDC (403), from the WD (401), a deletion request message, including the ID of the WDN, for deleting the WDN;
deleting the WDN at the WDC (403); and
transmitting, from the WDC (403), to the WD (401), a response message corresponding to the deletion request message.

6. A method of managing a wireless docking network, WDN, by a wireless dockee, WD, (401) the method comprising the steps of:
transmitting (605, 715), from the WD (401), to a wireless docking center, WDC, (403) a creation request message for creating a WDN, the creation request message comprising a plurality of peripheral device (405, 407, 409) IDs; and
receiving, at the WD (401), from the WDC (403), a response message including an identification, ID, of the WDN created according to the creation request message.

7. The method of claim 6, further comprising:
transmitting (727, 731, 735), from the WD (401), to the WDC (403), a modify request message, including the ID of the WDN, for modifying the WDN; and
receiving, at the WD (401), from the WDC (403), a response message corresponding to the modify request message.

8. The method of claim 7, wherein transmitting (727) the modify request message comprises inserting IDs of one or more of the plurality of peripheral devices (405, 407, 409) into the modify request message, and making a request to add the one or more of the plurality ofperipheral devices (405, 407, 409) to the WDN.

9. The method of claim 7, wherein the transmitting (731) the modify request message comprises inserting an ID of a peripheral device (405, 407, 409) within the WDN into the modify request message, and making a request to remove the peripheral device (405, 407, 409) from the WDN.

10. The method of claim 6, further comprising:
transmitting (735), from the WD (401), to the WDC (403), a deletion request message including the ID of the WDN for deleting the WDN; and
receiving, at the WD (401), from the WDC (403), a response message corresponding to the deletion request message.

11. A wireless docking center, WDC, (403) device (403) for managing a wireless docking network, WDN, the WDC device (403) comprising:
a transceiver (1003) configured to receive, from a wireless dockee, WD, (401) a creation request message for creating the WDN, the creation request message comprising a plurality of peripheral device (405, 407, 409) IDs; and
a controller (1001) configured to identify one or more of the plurality of peripheral devices (405, 407, 409) based on the creation request message, to create the WDN based on the one or more of the plurality of peripheral devices (405, 407, 409), and to transmit, to the WD (401), a response message including an identification, ID, of the WDN.

12. The WDC device of claim 11 adapted to operate according to one of claims 2 to 5.

13. A wireless dockee, WD, device (401) for managing a wireless docking network, WDN, the WD device comprising:
a transceiver (1103) configured to transmit and receive signals; and
a controller (1101) configured to control the transceiver to transmit, to a wireless docking center, WDC, (403) a creation request message for creating the WDN, the creation request message comprising a plurality of peripheral device (405, 407, 409) IDs, and to control the transceiver (1103) to receive, from the WDC (403), a response message including an identification, ID, of the WDN created according to the creation request message.

14. The WD device (401) of claim 13 adapted to operate according to one of claims 7 to 10.

## Patentansprüche

1. Ein Verfahren zur Verwaltung eines drahtlosen Docking-Netzwerks (Wireless Docking Network, WDN) über ein drahtloses Docking-Zentrum (Wireless Docking Center, WDC) (403), wobei das Verfahren die folgenden Schritte umfasst:
Empfangen einer Erstellungsanforderungsnachricht zum Erstellen des WDN von einer drahtlosen Dockee-Vorrichtung (Wireless Dockee, WD) (401) an dem WDC (403), wobei die Erstellungsanforderungsnachricht eine Vielzahl von IDs peripherer Vorrichtungen (405, 407, 409) umfasst; wobei das Verfahren weiter durch die folgenden Schritte gekennzeichnet ist:
Identifizieren von mindestens einer peripheren Vorrichtung aus der Vielzahl peripherer Vorrichtungen (405, 407, 409) an dem WDC (403) basierend auf der Erstellungsanforderungsnachricht;
Erstellen des WDN an dem WDC (403) basierend auf der mindestens einen peripheren Vorrichtung aus der Vielzahl von peripheren Vorrichtungen (405, 407, 409); und
Übertragen einer Antwortnachricht einschließlich einer Identifizierung (ID) des WDN über das WDC (403) an die WD (401).

2. Das Verfahren nach Anspruch 1, wobei dieses weiter Folgendes umfasst:
Empfangen einer Änderungsanforderungsnachricht von der WD (401) einschließlich der ID des WDN zur Änderung des WDN an dem WDC (403);
Ändern des erstellten WDN entsprechend der Änderungsanforderungsnachricht; und
Übertragen einer Antwortnachricht entsprechend der Änderungsanforderungsnachricht über das WDC (403) an die WD (401).

3. Das Verfahren nach Anspruch 2, wobei das Ändern des WDN umfasst, dass mindestens eine periphere Vorrichtung aus der Vielzahl peripherer Vorrichtungen (405, 407, 409) zum WDN hinzugefügt wird, wenn die Änderungsanforderungsnachricht IDs der Vielzahl peripherer Vorrichtungen (405, 407, 409) umfasst.

4. Das Verfahren nach Anspruch 2, wobei das Ändern des WDN umfasst, dass eine periphere Vorrichtung (405, 407, 409) aus dem WDN entfernt wird, wenn die Änderungsanforderungsnachricht innerhalb des WDN eine ID der peripheren Vorrichtung (405, 407, 409) aufweist.

5. Das Verfahren nach Anspruch 1, wobei dieses weiter Folgendes umfasst:
Empfangen einer Löschanforderungsnachricht von der WD (401) einschließlich der ID des WDN zur Löschung des WDN an dem WDC (403);
Löschen des WDN an dem WDC (403); und
Übertragen einer Antwortnachricht entsprechend der Löschanforderungsnachricht über das WDC (403) an die WD (401).

6. Ein Verfahren zur Verwaltung eines drahtlosen Docking-Netzwerks (Wireless Docking Network, WDN) über eine drahtlose Dockee-Vorrichtung (Wireless Dockee, WD) (401), wobei das Verfahren die folgenden Schritte umfasst:
Übertragen (605, 715) einer Erstellungsanforderungsnachricht zum Erstellen eines WDN von der WD (401) an ein drahtloses Docking-Zentrum (Wireless Docking Center, WDC) (403), wobei die Erstellungsanforderungsnachricht eine Vielzahl von IDs peripherer Vorrichtungen (405, 407, 409) umfasst; und
Empfangen einer Antwortnachricht von dem WDC (403) einschließlich einer Identifizierung (ID) des entsprechend der Erstellungsanforderungsnachricht erstellten WDN an der WD (401).

7. Das Verfahren nach Anspruch 6, wobei dieses weiter Folgendes umfasst:
Übertragen (727, 731, 735) einer Änderungsanforderungsnachricht einschließlich der ID des WDN zur Änderung des WDN über die WD (403) an das WDC (401); und
Empfangen einer Antwortnachricht entsprechend der Änderungsanforderungsnachricht von dem WDC (401) an der WD (403).

8. Das Verfahren nach Anspruch 7, wobei das Übertragen (727) der Änderungsanforderungsnachricht umfasst, dass IDs von mindestens einer peripheren Vorrichtung aus der Vielzahl peripherer Vorrichtungen (405, 407, 409) in die Änderungsanforderungsnachricht eingefügt werden und eine Anforderung gesendet wird, um die mindestens eine periphere Vorrichtung aus der Vielzahl peripherer Vorrichtungen (405, 407, 409) zum WDN hinzuzufügen.

9. Das Verfahren nach Anspruch 7, wobei das Übertragen (731) der Änderungsanforderungsnachricht umfasst, dass eine ID einer peripheren Vorrichtung (405, 407, 409) innerhalb des WDN in die Änderungsanforderungsnachricht eingefügt wird und eine Anforderung gesendet wird, um die periphere Vorrichtung (405, 407, 409) aus dem WDN zu entfernen.

10. Das Verfahren nach Anspruch 6, wobei dieses weiter Folgendes umfasst:
Übertragen (735) einer Löschanforderungsnachricht einschließlich der ID des WDN zur Löschung des WDN über die WD (403) an das WDC (401); und
Empfangen einer Antwortnachricht entsprechend der Löschanforderungsnachricht von dem WDC (401) an der WD (403).

11. Eine Vorrichtung eines drahtlosen Docking-Zentrums (Wireless Docking Center, WDC) (403) zur Verwaltung eines drahtlosen Docking-Netzwerks (Wireless Docking Network, WDN), wobei die WDC-Vorrichtung (403) Folgendes umfasst:
eine Sende-/Empfangseinrichtung (1003), die eingerichtet ist, um eine Erstellungsanforderungsnachricht zum Erstellen des WDN von einer drahtlosen Dockee-Vorrichtung (Wireless Dockee, WD) (401) zu empfangen, wobei die Erstellungsanforderungsnachricht eine Vielzahl von IDs peripherer Vorrichtungen (405, 407, 409) umfasst; und
eine Steuereinheit (1001), die eingerichtet ist, um basierend auf der Erstellungsanforderungsnachricht mindestens eine periphere Vorrichtung aus der Vielzahl peripherer Vorrichtungen (405, 407, 409) zu identifizieren, das WDN basierend auf der mindestens einen peripheren Vorrichtung aus der Vielzahl peripherer Vorrichtungen (405, 407, 409) zu erstellen und eine Antwortnachricht einschließlich einer Identifizierung (ID) des WDN an die WD (401) zu übertragen.

12. Die WDC-Vorrichtung nach Anspruch 11, die für den Betrieb nach einem der Ansprüche 2 bis 5 ausgelegt ist.

13. Eine drahtlose Dockee-Vorrichtung (Wireless Dockee, WD) (401) zur Verwaltung eines drahtlosen Docking-Netzwerks (Wireless Docking Network, WDN), wobei die WD-Vorrichtung Folgendes umfasst:
eine Sende-/Empfangseinrichtung (1103), die zum Übertragen und Empfangen von Signalen eingerichtet ist; und
eine Steuereinheit (1101), die eingerichtet ist, um die Sende-/Empfangseinrichtung zu steuern, damit diese eine Erstellungsanforderungsnachricht zum Erstellen des WDN an ein drahtloses Docking-Zentrum (Wireless Docking Center, WDC) (403) überträgt, wobei die Erstellungsanforderungsnachricht eine Vielzahl von IDs peripherer Vorrichtungen (405, 407, 409) umfasst, und um die Sende-/Empfangseinrichtung (1103) zu steuern, damit diese eine Antwortnachricht einschließlich einer Identifizierung (ID) des entsprechend der Erstellungsanforderungsnachricht erstellten WDN von dem WDC (403) empfängt.

14. Die WD-Vorrichtung (401) nach Anspruch 13, die für den Betrieb nach einem der Ansprüche 7 bis 10 ausgelegt ist.

## Revendications

1. Un procédé de gestion d'un réseau d'accueil sans fil, WDN, par un centre d'accueil sans fil, WDC (403), le procédé comprenant les opérations suivantes :
la réception, au niveau du WDC (403), d'un message de demande de création destiné à la création du WDN à partir d'un dispositif accueilli sans fil, WD, (401), le message de demande de création contenant une pluralité d'identifications de dispositifs périphériques (405, 407, 409), le procédé étant **caractérisé en outre par** les opérations suivantes :
l'identification, au niveau du WDC (403), d'un ou de plusieurs dispositifs de la pluralité de dispositifs périphériques (405, 407, 409) en fonction du message de demande de création,
la création, au niveau du WDC (403), du WDN en fonction des un ou plusieurs dispositifs de la pluralité de dispositifs périphériques (405, 407, 409), et
la transmission, du WDC (403) au WD (401), d'un message en réponse contenant une identification, ID, du WDN.

2. Le procédé selon la Revendication 1, comprenant en outre :
la réception, au niveau du WDC (403), à partir du WD (401), d'un message de demande de modification contenant l'identification du WDN destiné à la modification du WDN,
la modification du WDN créé en fonction du message de demande de modification, et
la transmission, du WDC (403) au WD (401), d'un message en réponse correspondant au message de demande de modification.

3. Le procédé selon la Revendication 2, où la modification du WDN comprend l'ajout d'un ou de plusieurs dispositifs de la pluralité de dispositifs périphériques (405, 407, 409) au WDN lorsque le message de demande de modification contient des identifications de la pluralité de dispositifs périphériques (405, 407, 409).

4. Le procédé selon la Revendication 2, où la modification du WDN comprend la suppression d'un dispositif périphérique (405, 407, 409) à partir du WDN lorsque le message de demande de modification contient une identification du dispositif périphérique (405, 407, 409) à l'intérieur du WDN.

5. Le procédé selon la Revendication 1, comprenant en outre :
la réception, au niveau du WDC (403), à partir du WD (401), d'un message de demande de suppression, contenant l'identification du WDN, destiné à la suppression du WDN,
la suppression du WDN au niveau du WDC (403), et
la transmission, du WDC (403) au WD (401), d'un message en réponse correspondant au message de demande de suppression.

6. Un procédé de gestion d'un réseau d'accueil sans fil, WDN, par un dispositif accueilli sans fil, WD (401), le procédé comprenant les opérations suivantes :
la transmission (605, 715), du WD (401) à un centre d'accueil sans fil, WDC (403), d'un message de demande de création destiné à la création d'un WDN, le message de demande de création contenant une pluralité d'identifications de dispositifs périphériques (405, 407, 409), et
la réception, au niveau du WD (401), à partir du WDC (403), d'un message en réponse contenant une identification, ID, du WDN créée en fonction du message de demande de création.

7. Le procédé selon la Revendication 6, comprenant en outre :
la transmission (727, 731, 735), du WD (401) au WDC (403), d'un message de demande de modification, contenant l'identification du WDN, destiné à la modification du WDN, et
la réception, au niveau du WD (401), à partir du WDC (403), d'un message en réponse correspondant au message de demande de modification.

8. Le procédé selon la Revendication 7, où la transmission (727) du message de demande de modification comprend l'insertion d'identifications d'un ou de plusieurs dispositifs de la pluralité de dispositifs périphériques (405, 407, 409) dans le message de demande de modification, et l'établissement d'une demande destinée à l'ajout des un ou plusieurs dispositifs de la pluralité de dispositifs périphériques (405, 407, 409) au WDN.

9. Le procédé selon la Revendication 7, où la transmission (731) du message de demande de modification comprend l'insertion d'une identification d'un dispositif périphérique (405, 407, 409) à l'intérieur du WDN dans le message de demande de modification, et l'établissement d'une demande de suppression du dispositif périphérique (405, 407, 409) du WDN.

10. Le procédé selon la Revendication 6, comprenant en outre :
la transmission (735), du WD (401) au WDC (403), d'un message de demande de suppression contenant l'identification du WDN destiné à la suppression du WDN, et
la réception, au niveau du WD (401), à partir du WDC (403), d'un message en réponse correspondant au message de demande de suppression.

11. Un dispositif de centre d'accueil sans fil, WDC (403), destiné à la gestion d'un réseau d'accueil sans fil, WDN, le dispositif WDC (403) comprenant :
un émetteur-récepteur (1003) configuré de façon à recevoir, à partir d'un dispositif accueilli sans fil, WD (401), un message de demande de création destiné à la création du WDN, le message de demande de création contenant une pluralité d'identifications de dispositifs périphériques (405, 407, 409), et
un dispositif de commande (1001) configuré de façon à identifier un ou plusieurs dispositifs de la pluralité de dispositifs périphériques (405, 407, 409) en fonction du message de demande de création, de façon à créer le WDN en fonction des un ou plusieurs dispositifs de la pluralité de dispositifs périphériques (405, 407, 409), et à transmettre, au WD (401), un message en réponse contenant une identification, ID, du WDN.

12. Le dispositif WDC selon la Revendication 11 adapté de façon à fonctionner selon l'une quelconque des Revendications 2 à 5.

13. Un dispositif accueilli sans fil, WD (401), destiné à la gestion d'un réseau d'accueil sans fil, WDN, le dispositif WD comprenant :
un émetteur-récepteur (1103) configuré de façon à émettre et recevoir des signaux, et
un dispositif de commande (1101) configuré de façon à commander l'émetteur-récepteur de façon à émettre, vers un centre d'accueil sans fil, WDC (403), un message de demande de création destiné à la création du WDN, le message de demande de création contenant une pluralité d'identifications de dispositifs périphériques (405, 407, 409), et à commander l'émetteur-récepteur (1103) de façon à recevoir, à partir du WDC (403), un message en réponse contenant une identification, ID, du WDN créée en fonction du message de demande de création.

14. Le dispositif WD (401) selon la Revendication 13 adapté de façon à fonctionner selon l'une quelconque des Revendications 7 à 10.
